# EUROPEAN PATENT SPECIFICATION

(11) **EP 2 838 142 B1**
(45) Date of publication and mention of the grant of the patent: **24.04.2019**
(21) Application number: 14162829.7
(22) Date of filing: 31.03.2014
(51) Int. Cl.: H01M 10/42, H01M 4/02, H01M 4/36, H01M 4/62, H01M 10/0525

(54) **Negative electrode for a rechargeable lithium battery and a rechargeable lithium battery including the same**
Negative Elektrode für eine wiederaufladbare Lithiumbatterie und wiederaufladbare Lithiumbatterie damit
Électrode négative pour batterie rechargeable au lithium et batterie rechargeable au lithium la comprenant

(30) Priority: 14.08.2013 US 201361865985 P; 27.03.2014 US 201414228118
(43) Date of publication of application: 18.02.2015
(73) Proprietor: Samsung SDI Co., Ltd., Yongin-si, Gyeonggi-do (KR)
(72) Inventor: Nam, Jung-Hyun, Gyeonggi-do (KR); Park, Jong-Hwan, Gyeonggi-do (KR); Choi, Yeon-Joo, Gyeonggi-do (KR); Lee, Eon-Mi, Gyeonggi-do (KR); Seok, Hoon, Gyeonggi-do (KR)
(74) Representative: Mounteney, Simon James

(56) References cited:
- US-A1- 2004 175 621
- US-B1- 6 365 299
- WU Y P ET AL: "Carbon anode materials for lithium ion batteries", JOURNAL OF POWER SOURCES, ELSEVIER SA, CH, vol. 114, no. 2, 12 March 2003 (2003-03-12), pages 228-236, XP004411640, ISSN: 0378-7753, DOI: 10.1016/S0378-7753(02)00596-7

## Description

### BACKGROUND

### 1. Field

A negative electrode for a rechargeable lithium battery and a rechargeable lithium battery including the same are disclosed.

### 2. Description of the Related Art

In recent times, due to reductions in the size and weight of portable electronic devices, there has been a need to develop rechargeable lithium batteries for use in portable electronic devices having both high performance and high capacity.

Oxides including lithium and transition elements and being capable of intercalating and deintercalating lithium ions, and for example, LiCoO₂, LiMn₂O₄, LiNi₁₋ₓCoₓO₂ (0 < x < 1), and the like have been used as a positive active material for rechargeable lithium batteries. As for negative active materials of rechargeable lithium batteries, various carbon-based materials such as artificial graphite, natural graphite, and hard carbon, which intercalate and deintercalate lithium ions, have been used.

Such rechargeable lithium batteries have stability and safety problems, since the positive and negative electrodes become thermally unstable depending on their charge state at a temperature of greater than or equal to 25° C, and thus, the positive and negative active materials, electrolyte salt, and an organic solvent therein may be decomposed.

In addition, the requirement of higher battery stability and safety is becoming more difficult to satisfy due to an increasing demand for higher capacity batteries.

US 6,365,299 B1 relates to a nonaqueous secondary battery comprising a positive electrode and a negative electrode both containing a material capable of reversibly intercalating and deintercalating lithium, a nonaqueous electrolyte containing a lithium salt, and a separator, which has at least one protective layer on the negative electrode and/or the positive electrode.

US 2004/175621 A1 relates to an anode for a secondary battery capable of inserting and extracting a lithium ion having a multi-layered structure including a first anode layer containing carbon as a main component; a second anode layer made of a film-like material through which a lithium component passes; and a third anode layer containing lithium and/or a lithium-containing compound as a main component.

WU Y. P. et al. "Carbon anode materials for lithium ion batteries", Journal of Power Sources, 114, 2003, pp 228-236 discloses coating graphite and carbon anode materials with polymers, and composites of carbon and metal/metal oxides.

### SUMMARY

According to a first aspect, the present invention provides a negative electrode for a rechargeable lithium battery as claimed in Claim 1. Preferred embodiments of the negative electrode are recited in the dependent claims.

According to a further aspect, the present invention provides a rechargeable lithium battery as claimed in Claim 9.

A preferred embodiment is recited in the dependent claim.

One embodiment provides a negative electrode for a rechargeable lithium battery having excellent safety, thermal stability, and cycle-life characteristics by initially suppressing exothermicity of the battery and preventing a short-circuit between positive and negative electrodes.

Another embodiment provides a rechargeable lithium battery including the negative electrode for a rechargeable lithium battery.

One embodiment provides a negative electrode for a rechargeable lithium battery including a current collector; a negative active material layer disposed on the current collector; and a coating layer disposed on the negative active material layer and including a particulate organic material and an inorganic material, wherein the coating layer has a single layered or multi-layered structure.

The coating layer may be a composite layer including the particulate organic material and the inorganic material in a single layer.

The coating layer may include an inorganic layer including the inorganic material; and an organic layer including the particulate organic material.

The negative electrode may include the inorganic layer disposed on the electrode active material layer, and the organic layer disposed on the inorganic layer; or the negative electrode may include the organic layer disposed on the electrode active material layer, and the inorganic layer disposed on the organic layer.

The particulate organic material may include a polymer particle having a melting point of 85 to 130 ° C. The polymer particle may include a polyolefin, a polyolefin derivative, a polyolefin wax, an acryl-based compound, or a combination thereof. The weight average molecular weight of the polymer particle may range from 300 to 10,000, and the size of the polymer particle may range from 0.1 to 5 µm.

The particulate organic material may be included in an amount of 0.5 to 10 wt% based on the total weight of the negative active material layer and the coating layer.

The inorganic material may include SiO₂, Al₂O₃, Al(OH)₃, AlO(OH), TiO₂, BaTiO₂, ZnO₂, Mg(OH)₂, MgO, Ti(OH)₄, aluminum nitride, silicon carbide, boron nitride, or a combination thereof.

The inorganic material may have a particle size of 0.1 to 5 µm.

The inorganic material may be included in an amount of 1 to 20 wt% based on the total weight of the negative active material layer and the coating layer.

The thickness of the composite layer may range from 1 to 20 µm.

The thickness of the inorganic layer may range from 1 to 10 µm, and the thickness of the organic layer may range from 1 to 10 µm.

The coating layer may further include a binder different from the particulate organic material, and the binder may include a styrene-butadiene rubber (SBR), carboxylmethyl cellulose (CMC), polyvinylidene fluoride (PVdF), a polyvinylidene fluoride-hexafluoropropylene (PVdF-HFP) copolymer, ethylenevinylacetate (EVA), hydroxyethyl cellulose (HEC), polyvinyl alcohol (PVA), polyvinylbutyral (PVB), an ethylene-acrylic acid copolymer, acrylonitrile, a vinyl acetate derivative, polyethylene glycol, an acryl-based rubber, or a combination thereof.

Another embodiment provides a rechargeable lithium battery including the negative electrode; a positive electrode; a separator and an electrolyte solution.

Other embodiments are included in the following detailed description.

A rechargeable lithium battery having excellent safety, thermal stability, and cycle-life characteristics may be realized by initially suppressing exothermicity and preventing a short-circuit between positive and negative electrodes.

### BRIEF DESCRIPTION OF THE DRAWINGS

FIG. 1 is a schematic view showing a rechargeable lithium battery according to one embodiment.
FIG. 2 is a cross-sectional view showing the structure of a negative electrode for a rechargeable lithium battery according to one embodiment.
FIG. 3 is a cross-sectional view showing the structure of a negative electrode for a rechargeable lithium battery according to another embodiment.
FIG. 4 is a cross-sectional view showing the structure of a negative electrode for a rechargeable lithium battery according to yet another embodiment.
FIG. 5 is a graph showing the relationship between temperature and resistance of the negative electrodes for a rechargeable lithium battery according to Examples 1 and 2 and Comparative Examples 1 and 2.

### Description of Symbols:

10, 20, 30: negative electrode
11, 21, 31: current collector
12, 22, 32: negative active material layer
13: composite layer
14, 26, 35: particulate organic material
15, 25, 36: inorganic material
23, 34: inorganic layer
24, 33: organic layer
100: rechargeable lithium battery
110: electrode assembly
120: battery case
130: electrode tab

### DETAILED DESCRIPTION

Hereinafter, embodiments are described in detail. However, these embodiments are described by way of example, and this disclosure is not limited thereto.

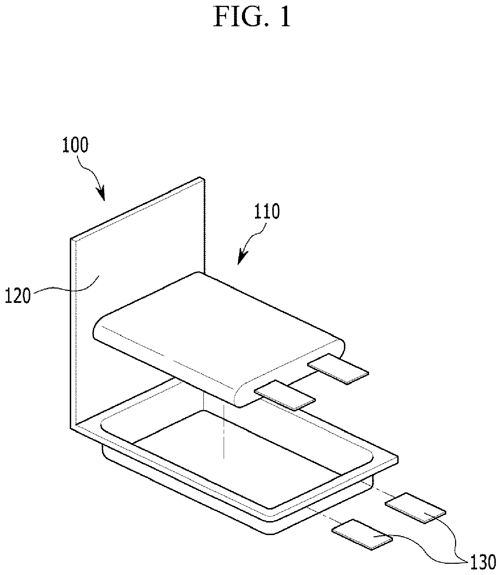

A rechargeable lithium battery according to one embodiment is described referring to FIG. 1.

FIG. 1 is a schematic view showing a rechargeable lithium battery according to one embodiment.

Referring to FIG. 1, a rechargeable lithium battery 100 according to one embodiment includes an electrode assembly 110, a battery case 120 housing the electrode assembly 110, and an electrode tab 130 serving as an electrical channel for externally inducing a current formed in the electrode assembly 110. Both sides of the battery case 120 are overlapped and sealed. In addition, an electrolyte solution is injected into the battery case 120 housing the electrode assembly 110.

The electrode assembly 110 consists of a positive electrode, a negative electrode facing the positive electrode, and a separator interposed between the positive and negative electrodes.

The negative electrode according to one embodiment includes a current collector, a negative active material layer disposed on the current collector, and a coating layer disposed on the negative active material layer, wherein the coating layer has a single layered or multi-layered structure and includes a particulate organic material and an inorganic material.

When the particulate organic material is coated on the negative active material layer, the particulate organic material may prevent movement of lithium ions due to a shut-down function and increase the internal resistance of a battery and thus, deteriorate electrical/chemical reactivity. Accordingly, when the particulate organic material capable of shutting down is coated on an electrode and specifically, on the surface of a negative electrode, exothermicity of a battery may be initially suppressed.

In addition, the inorganic material is coated on the negative active material layer and forms an electrically insulating layer on an electrode and specifically, on the surface of a negative electrode and thus, may prevent a short-circuit between positive and negative electrodes.

Accordingly, when the particulate organic material and the inorganic material are coated on the surface of a negative electrode, exothermicity of a battery may be initially suppressed, and a short-circuit between positive and negative electrodes may be prevented, as a result improving the safety, thermal stability, and cycle-life characteristics of the rechargeable lithium battery.

If the particulate organic material and the inorganic material are coated on the surface of a separator substrate, the separator may be broken due to a physical impact and nullify the effects of the particulate organic material. According to one embodiment, the particulate organic material and the inorganic material are directly coated on the surface of an electrode, a strong support, and thus, may more stably improve the safety of a rechargeable lithium battery. In addition, the particulate organic material and the inorganic material may protect an electrode, prevent detachment of an electrode active material and decrease the surface roughness of the electrode, and thus, remove any defects due to electrode friction during the assembly of a battery.

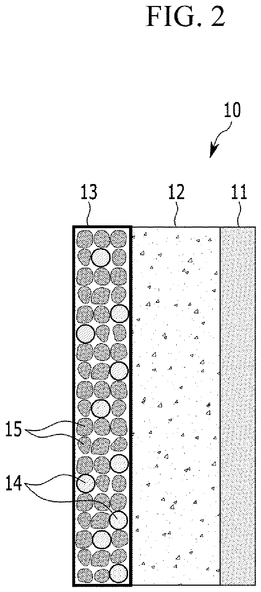

The structure of a negative electrode according to one embodiment is illustrated specifically referring to FIGS. 2 to 4. FIGS. 2 to 4 provide an illustration by way of example, but the present invention is not limited thereto.

FIG. 2 is a cross-sectional view showing the structure of a negative electrode for a rechargeable lithium battery according to one embodiment.

Referring to FIG. 2, a negative electrode 10 for a rechargeable lithium battery according to one embodiment includes a current collector 11, a negative active material layer 12 disposed on the current collector 11, and a coating layer disposed on the negative active material layer 12. In FIG. 2, the coating layer has a single layer structure and specifically, may be a composite layer 13 in which a particulate organic material 14 and an inorganic material 15 form a single layer.

In this way, when a particulate organic material and an inorganic material are coated on an electrode and specifically on the surface of a negative electrode as a single layer, the particulate organic material may shut down a battery and thus, initially suppress exothermicity of the battery, while the inorganic material has an electrical insulation property and thus, may prevent a short-circuit between positive and negative electrodes. Accordingly, safety, thermal stability, and cycle-life characteristics of the rechargeable lithium battery may be improved.

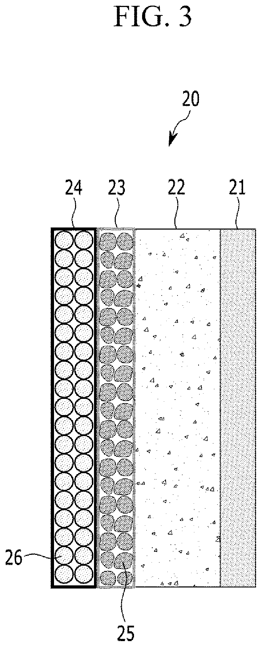

FIG. 3 is a cross-sectional view showing the structure of a negative electrode for a rechargeable lithium battery according to another embodiment.

Referring to FIG. 3, a negative electrode 20 for a rechargeable lithium battery according to one embodiment includes a current collector 21, a negative active material layer 22 disposed on the current collector 21, and a coating layer disposed on the negative active material layer 22. In FIG. 3, the coating layer has a multi-layered structure and specifically, may include an inorganic layer 23 including an inorganic material 25 and an organic layer 24 including a particulate organic material 26. Herein, the inorganic layer 23 may be coated on the negative active material layer 22, and the organic layer 24 may be coated on the inorganic layer 23.

In this way, when a particulate organic material and an inorganic material are coated on an electrode and, specifically, on the surface of a negative electrode, and, more specifically, the inorganic material is coated on the surface of a negative electrode, and the particulate organic material is formed as a separate layer thereon, the particulate organic material may initially suppress exothermicity of a battery due to a shut-down function, while the inorganic material may prevent a short-circuit between positive and negative electrodes due to an electrical insulation property. Accordingly, safety, thermal stability, and cycle-life characteristics of the rechargeable lithium battery may be improved.

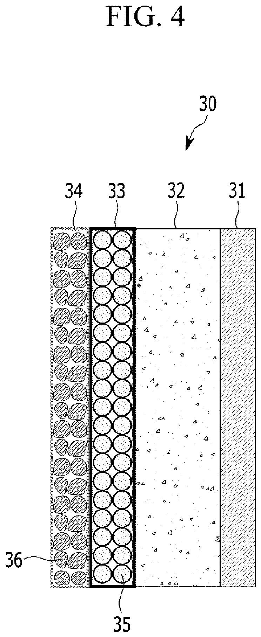

FIG. 4 is a cross-sectional view showing a structure of a negative electrode for a rechargeable lithium battery according to yet another embodiment.

Referring to FIG. 4, a negative electrode 30 for a rechargeable lithium battery according to one embodiment includes a current collector 31, a negative active material layer 32 disposed on the current collector 31, and a coating layer disposed on the negative active material layer 32. In FIG. 4, the coating layer shows a multi-layered structure and specifically, may include an organic layer 33 including a particulate organic material 35 and an inorganic layer 34 including an inorganic material 36. Herein, the organic layer 33 may be coated on the negative active material layer 32, and the inorganic layer 34 may be coated on the organic layer 33.

In this way, when a particulate organic material and an inorganic material are coated on an electrode and specifically, on the surface of a negative electrode, and more specifically, the particulate organic material is coated on the surface of a negative electrode, and an inorganic material is coated thereon as a separate layer, the particulate organic material may initially suppress exothermicity of a battery due to a shut-down function, and the inorganic material may prevent a short-circuit between positive and negative electrodes due to an electrical insulation property. Accordingly, safety, thermal stability, and cycle-life characteristics of the rechargeable lithium battery may be improved.

The particulate organic material, and specifically, the particulate organic material included in the composite layer and in the organic layer in FIGS. 2 to 4, may include a polymer particle having a melting point of 85 to 130 ° C. When the particulate organic material has a melting point within this range, exothermicity of a battery may be initially suppressed due to a shut-down function of the particulate organic material.

According to an embodiment, the separator comprises an organic material and the melting point of the organic material of the separator is higher than the melting point of the particulate organic material of the coating layer.

The separator may include an organic material such as a polyolefin based polymer. The organic material of the separator may have a melting point of 130° C or more, and thus, the separator may conduct a shut-down function at a temperature of 130° C or more. However, in the case of a battery having a high energy density for high capacity or using an active material in which structural or chemical stability is decreased, initial exothermicity rapidly increases when the battery has abnormal exothermicity, and thus, it is difficult to control the stability of the battery with only the shut-down function of the separator. According to one embodiment, by coating a particulate organic material having a lower melting point than the organic material of the separator on the negative active material layer, the particulate organic material coated on the negative active material layer may be first melted and shut-down at a lower temperature than 130° C, and thus electrical/chemical reactivity may be suppressed at a lower temperature and exothermicity of the battery may be initially suppressed. In other words, the reactivity of a battery may be primarily suppressed by a shut-down of a particulate organic material coated on the negative active material layer, and then shut-down of the organic material of the separator may be secondarily generated. Accordingly, the stability of a battery may be effectively obtained. Specifically, where the particulate organic material of the coating layer is a polymer, the polymer particle may include a polyolefin, a polyolefin derivative, a polyolefin wax, an acryl-based compound, or a combination thereof. The polyolefin may be, for example, polyethylene, polypropylene, or a combination thereof. Among them, polyethylene may be used preferably.

The weight average molecular weight of the polymer particle may range from 300 to 10,000, and specifically 2,000 to 6,000. The size of the polymer particle may range from 0.1 to 5 µm, and specifically 0.2 to 3 µm. When the polymer particle has a weight average molecular weight and a size within these ranges, the polymer may minimize movement resistance of lithium ions, secure performance of a battery, reinforce a shut-down function of a particulate organic material, and thus initially suppress exothermicity of the battery.

The particulate organic material may be included in an amount of 0.5 to 10 wt%, specifically 3 to 7 wt% based on the total weight of the negative active material layer and the coating layer.. When the particulate organic material is included within the range, its shut-down function is further reinforced, and exothermicity of a battery may be initially suppressed.

The inorganic material, and specifically the inorganic material included in the composite layer and the inorganic layer in FIGS. 2 to 4, may include SiO₂, Al₂O₃, Al(OH)₃, AIO(OH), TiO₂, BaTiO₂, ZnO₂, Mg(OH)₂, MgO, Ti(OH)₄, aluminum nitride, silicon carbide, boron nitride, or a combination thereof.

The particle size of the inorganic material may range from 0.1 to 5 µm, and specifically 0.3 to 1 µm. When the inorganic material particle has a size within this range, the inorganic material may be uniformly coated on the negative active material layer, and thus prevent a short-circuit between positive and negative electrodes due to an excellent electrical insulation property. In addition, the inorganic material layer may minimize movement resistance of lithium ions and secure battery performance.

The inorganic material may be included in an amount of 1 to 20 wt%, specifically 5 to 12 wt% based on the total weight of the negative active material layer and the coating layer.. When the inorganic material is included within the above range, the inorganic material has an excellent electrical insulation property and may prevent a short-circuit between positive and negative electrodes.

In FIG. 2, the thickness of the composite layer including the particulate organic material and the inorganic material may range from 1 to 20 µm, and specifically 2 to 10 µm. When the composite layer has a thickness within this range, the composite layer has an excellent shut-down function and electrical insulation property, and thus may initially suppress exothermicity of a battery and prevent a short-circuit between positive and negative electrodes. In addition, the composite layer may minimize movement resistance of lithium ions and the thickness of a coating layer and thus, secure battery performance.

In FIGS. 3 and 4, the thickness of the inorganic layer may range from 1 to 10 µm, and specifically 2 to 7 µm, and the thickness of the organic layer may range from 1 to 10 µm, and specifically 3 to 7 µm. When the inorganic and organic layers respectively have a thickness within the range, a short-circuit between positive and negative electrodes may be prevented due to an excellent electrical insulation property, and exothermicity of a battery may be initially suppressed due to reinforced shut-down function. In addition, the inorganic and organic layers may minimize movement resistance of lithium ions and the thickness of a coating layer, and thus secure battery performance.

The coating layer, and specifically the composite layer of FIG. 2, may further include a binder as well as the particulate organic material and the inorganic material. In FIGS. 3 and 4, the organic layer may further include a binder as well as the particulate organic material, and the inorganic layer may further include a binder as well as the inorganic material.

The binder may be a different material from the particulate organic material. Specific examples of the binder may include a styrene-butadiene rubber (SBR), carboxylmethyl cellulose (CMC), polyvinylidene fluoride (PVdF), a polyvinylidene fluoride-hexafluoropropylene (PVdF-HFP) copolymer, ethylenevinyl acetate (EVA), hydroxyethyl cellulose (HEC), polyvinyl alcohol (PVA), polyvinylbutyral (PVB), an ethylene-acrylic acid copolymer, acrylonitrile, a vinyl acetate derivative, polyethylene glycol, an acryl-based rubber, or a combination thereof, and among them, the styrene-butadiene rubber (SBR), a mixture of the styrene-butadiene rubber (SBR) and the carboxylmethyl cellulose (CMC), the ethylenevinylacetate (EVA), the polyvinyl alcohol (PVA), the ethylene-acrylic acid copolymer, or the acryl-based rubber may be preferably used.

When the binder is included in the coating layer, adherence with the surface of the negative electrode is improved, and adherence between organic material particles, between inorganic material particles, or between the particulate organic material and the inorganic material particles may be improved.

The current collector of the negative electrode may be a copper foil.

The negative active material layer includes a negative active material, a binder, and optionally a conductive material.

The negative active material may include a material that reversibly intercalates/deintercalates lithium ions, a lithium metal, a lithium metal alloy, a material capable of doping and dedoping lithium, or a transition metal oxide.

The material that reversibly intercalates/deintercalates lithium ions is preferably a carbon material, and may be any generally-used carbon-based negative active material for a rechargeable lithium battery, and examples thereof may be crystalline carbon, amorphous carbon or a mixture thereof. The crystalline carbon may be non-shaped, or sheet, flake, spherical, or fiber shaped natural graphite or artificial graphite, and the amorphous carbon may be a soft carbon (sintered carbon at a low temperature), a hard carbon, mesophase pitch carbonized products, fired coke, and the like.

The lithium metal alloy may be an alloy of lithium and a metal selected from Na, K, Rb, Cs, Fr, Be, Mg, Ca, Sr, Si, Sb, Pb, In, Zn, Ba, Ra, Ge, Al, and Sn.

The material being capable of doping and dedoping lithium may be Si, SiOₓ (0 < x < 2), a Si-C composite, a Si-Q alloy (wherein Q is an alkali metal, an alkaline-earth metal, Group 13 to 16 elements, transition metal, a rare earth element, or a combination thereof, and is not Si), Sn, SnO₂, a Sn-C composite, Sn-R (wherein R is an alkali metal, an alkaline-earth metal, Group 13 to 16 elements, transition metal, a rare earth element, or a combination thereof, and not Sn), and the like, and at least one of these materials may be mixed with SiO₂. Examples of the Q and R may be Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, or a combination thereof.

The transition metal oxide may be vanadium oxide, lithium vanadium oxide, and the like.

The binder improves the binding properties of the negative active material particles with one another and with a current collector, and examples thereof may be polyvinyl alcohol, carboxylmethyl cellulose, hydroxypropyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but are not limited thereto.

The conductive material improves the conductivity of an electrode. Any electrically conductive material may be used as a conductive material, unless it causes a chemical change, and examples thereof may be a carbon-based material such as natural graphite, artificial graphite, carbon black, acetylene black, ketjen black, carbon fiber and the like; a metal-based material such as a metal powder or a metal fiber and the like of copper, nickel, aluminum, silver, and the like; a conductive polymer such as a polyphenylene derivative and the like; or a mixture thereof.

The negative electrode may be manufactured by a method including mixing the negative active material, the binder and the conductive material in a solvent to prepare a negative active material composition, and coating the negative active material composition on a negative current collector. The solvent includes N-methylpyrrolidone and the like, but is not limited thereto.

The positive electrode may include a current collector and a positive active material layer on the current collector.

The current collector may include aluminum, but is not limited thereto.

The positive active material layer includes a positive active material.

The positive active material may be a compound (lithiated intercalation compound) being capable of intercalating and deintercalating lithium, and specifically lithium metal oxide.

The lithium metal oxide may be specifically an oxide including at least one metal selected from cobalt, manganese, nickel, and aluminum, and lithium. More specifically, compounds represented by the following chemical formulae may be used.
LiₐA_{1-b}X_{b}D₂ (0.90 ≤ a ≤ 1.8, 0 ≤ b ≤ 0.5); LiₐA_{1-b}X_{b}O_{2-c}D_{c} (0.90 ≤ a ≤ 1.8, 0 ≤ b ≤ 0.5, 0 ≤ c ≤ 0.05); LiₐE_{1-b}X_{b}O_{2-c}D_{c} (0.90 ≤ a ≤ 1.8, 0 ≤ b ≤ 0.5, 0 ≤ c ≤ 0.05); LiₐE_{2-b}X_{b}O_{4-c}D_{c} (0.90 ≤ a ≤ 1.8, 0 ≤ b ≤ 0.5, 0 ≤ c ≤ 0.05); LiₐNi_{1-b-c}Co_{b}X_{c}D_{α} (0.90 ≤ a ≤ 1.8,0 ≤ b ≤ 0.5, 0 ≤ c ≤ 0.05, 0 < α ≤ 2); LiₐNi_{1-b-c}CO_{b}X_{c}O_{2-α}T_{α} (0.90 ≤ a ≤ 1.8, 0 ≤ b ≤ 0.5, 0 ≤ c ≤ 0.05, 0 < α < 2); LiₐNi_{1-b-c}Co_{b}X_{c}O_{2-α}T₂ (0.90 ≤ a ≤ 1.8, 0 ≤ b ≤ 0.5, 0 ≤ c ≤ 0.05, 0 < α < 2); LiₐNi_{1-b-c}Mn_{b}X_{c}D_{α} (0.90 ≤ a ≤ 1.8, 0 ≤ b ≤ 0.5, 0 ≤ c ≤ 0.05, 0 < α ≤ 2); LiₐNi_{1-b-c}Mn_{b}X_{c}O_{2-α}T_{α} (0.90 ≤ a ≤ 1.8, 0 ≤ b ≤ 0.5, 0 ≤ c ≤ 0.05, 0 < α < 2); LiₐNi_{1-b-c}Mn_{b}X_{c}O_{2-α}T₂ (0.90 ≤ a ≤ 1.8, 0 ≤ b ≤ 0.5, 0 ≤ c ≤ 0.05, 0 < α < 2); LiₐNi_{b}E_{c}G_{d}O₂ (0.90 ≤ a ≤ 1.8, 0 ≤ b ≤ 0.9, 0 ≤ c ≤ 0.5, 0.001 ≤ d ≤ 0.1); LiₐNi_{b}Co_{c}Mn_{d}GₑO₂ (0.90 ≤ a ≤ 1.8, 0 ≤ b ≤ 0.9, 0 ≤ c ≤ 0.5, 0 ≤ d ≤ 0.5, 0.001 ≤ e ≤ 0.1); LiₐNiG_{b}O₂ (0.90 ≤ a ≤ 1.8, 0.001 ≤ b ≤ 0.1); LiₐCoG_{b}O₂ (0.90 ≤ a ≤ 1.8, 0.001 ≤ b ≤ 0.1); LiₐMn_{1-b}G_{b}O₂ (0.90 ≤ a ≤ 1.8, 0.001 ≤ b ≤ 0.1); LiₐMn₂G_{b}O₄ (0.90 ≤ a ≤ 1.8, 0.001 ≤ b ≤ 0.1); LiₐMn_{1-g}G_{g}PO₄ (0.90 ≤ a ≤ 1.8, 0 ≤ g ≤ 0.5); QO₂; QS₂; LiQS₂; V₂O₅; LiV₂O₅; LiZO₂; LiNiVO₄; Li_{(3-f)}J₂(PO₄)₃ (0 ≤ f ≤ 2); Li_{(3-f)}Fe₂(PO₄)₃ (0 ≤ f ≤ 2); LiFePO₄.

In the above chemical formulae, A is selected from Ni, Co, Mn, and a combination thereof; X is selected from Al, Ni, Co, Mn, Cr, Fe, Mg, Sr, V, a rare earth element, and a combination thereof; D is selected from O, F, S, P, and a combination thereof; E is selected from Co, Mn, and a combination thereof; T is selected from F, S, P, and a combination thereof; G is selected from Al, Cr, Mn, Fe, Mg, La, Ce, Sr, V, and a combination thereof; Q is selected from Ti, Mo, Mn, and a combination thereof; Z is selected from Cr, V, Fe, Sc, Y, and a combination thereof; and J is selected from V, Cr, Mn, Co, Ni, Cu, and a combination thereof.

The lithium metal oxide may be more specifically lithium nickel cobalt manganese oxide, lithium nickel cobalt aluminum oxide, or a combination thereof, and among them, a mixture of the lithium nickel cobalt manganese oxide and the lithium nickel cobalt aluminum oxide may be preferably used.

The positive active material layer may further include a binder and a conductive material as well as the above-described positive active material.

The binder improves binding properties between the electrode active material and the acrylonitrile-based resin and also attaches the electrode active material on the positive current collector. Examples thereof may include polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but are not limited thereto.

The conductive material improves conductivity of an electrode. Any electrically conductive material may be used as a conductive material, unless it causes a chemical change, and examples thereof may be a carbon-based material such as natural graphite, artificial graphite, carbon black, acetylene black, ketjen black, a carbon fiber, and the like; a metal-based material such as a metal powder or a metal fiber and the like of copper, nickel, aluminum, silver, and the like; a conductive polymer such as a polyphenylene derivative and the like; or a mixture thereof.

The electrolyte solution includes a non-aqueous organic solvent and a lithium salt.

The non-aqueous organic solvent serves as a medium for transmitting ions taking part in the electrochemical reaction of a battery. The non-aqueous organic solvent may be selected from a carbonate-based, ester-based, ether-based, ketone-based, alcohol-based, or aprotic solvent.

The carbonate-based solvent may include, for example, dimethyl carbonate (DMC), diethyl carbonate (DEC), dipropyl carbonate (DPC), methylpropyl carbonate (MPC), ethylpropyl carbonate (EPC), methylethyl carbonate (MEC), ethylmethyl carbonate (EMC), ethylene carbonate (EC), propylene carbonate (PC), butylene carbonate (BC), and the like.

When the linear carbonate compounds and cyclic carbonate compounds are mixed, an organic solvent having high dielectric constant and low viscosity can be provided. The cyclic carbonate and the linear carbonate are mixed together in a volume ratio ranging from about 1:1 to about 1:9.

The ester-based solvent may include, for example n-methylacetate, n-ethylacetate, n-propylacetate, dimethylacetate, methylpropionate, ethylpropionate, γ-butyrolactone, decanolide, valerolactone, mevalonolactone, caprolactone, or the like. The ether solvent may include, for example dibutylether, tetraglyme, diglyme, dimethoxyethane, 2-methyltetrahydrofuran, tetrahydrofuran, and the like, and the ketone-based solvent may include cyclohexanone, and the like. The alcohol-based solvent may include, for example ethyl alcohol, isopropyl alcohol, and the like.

The non-aqueous organic solvent may be used singularly or in a mixture. When the organic solvent is used in a mixture, the mixture ratio may be controlled in accordance with a desirable battery performance.

The non-aqueous electrolyte solution may further include an overcharge inhibitor additive such as ethylenecarbonate, pyrocarbonate, or the like.

The lithium salt is dissolved in an organic solvent, supplies lithium ions in a battery, basically operates the rechargeable lithium battery, and improves lithium ion transportation between positive and negative electrodes therein.

The lithium salt may include LiPF₆, LiBF₄, LiSbF₆, LiAsF₆, LiN(SO₃C₂F₅)₂, LiC₄F₉SO₃, LiClO₄, LiAlO₂, LiAlCl₄, LiN(CₓF₂ₓ₊₁SO₂)(C_{y}F_{2y+1}SO₂) (where x and y are natural numbers), LiCI, Lil, LiB(C₂O₄)₂ (lithium bis(oxalato) borate, LiBOB), or a combination thereof, as a supporting electrolytic salt.

The lithium salt may be used in a concentration ranging from about 0.1 M to about 2.0 M. When the lithium salt is included within the above concentration range, an electrolyte may have improved performance and lithium ion mobility due to optimal electrolyte conductivity and viscosity.

The separator may include any materials commonly used in conventional lithium batteries, as long as it separates a negative electrode from a positive electrode and provides a transporting passage for lithium ions. In other words, the separator may be made of a material having a low resistance to ion transportation and an improved impregnation for an electrolyte. For example, the material may be selected from glass fiber, polyester, TEFLON (tetrafluoroethylene), polyethylene, polypropylene, polytetrafluoroethylene (PTFE), or a combination thereof. It may have a form of a non-woven fabric or a woven fabric. For example, a polyolefin-based polymer separator such as polyethylene, polypropylene or the like is mainly used for a lithium ion battery. In order to ensure the heat resistance or mechanical strength, a coated separator including a ceramic component or a polymer material may be used. Selectively, it may have a mono-layered or multi-layered structure.

Hereinafter, the embodiments are illustrated in more detail with reference to examples. However, the examples are in no way intended to be limiting.

Furthermore, what is not described in this disclosure may be sufficiently understood by those who have knowledge in this field and will not be illustrated here.

### Example 1

### (Manufacture of Negative Electrode)

An organic layer composition was prepared by mixing 98 wt% of a polyethylene particle (Mitsui Chemicals, Inc, Chemipearl W401) having a melting point of 110° C, an average particle size of 1µm, and a weight average molecular weight of 5,000, and 2 wt% of an acryl-based rubber (ZEON Corporation, BM-900B) in water.

An inorganic layer composition was prepared b mixing 95 wt% of Al₂O₃ (Sumitomo Chemical Co., AES-12) having a size of 0.45 µm and 5 wt% of an acryl-based rubber (ZEON Corporation, BM-520B) in an N-methylpyrrolidone solvent.

Slurry was prepared by adding 97.5 wt% of graphite, 1.5 wt% of a styrene-butadiene rubber (SBR), and 1 wt% of carboxylmethyl cellulose (CMC) to water as a solvent.

The slurry was coated on a copper foil and dried and then, pressed with a roll presser to form a negative active material layer. Subsequently, the inorganic layer composition was coated on the negative active material layer to form an inorganic layer, and the organic layer composition was coated on the inorganic layer to form an organic layer, manufacturing a negative electrode. Herein, the inorganic layer was 6 µm thick, and the organic layer was 2 µm thick. Herein, the polyethylene particle and the Al₂O₃ were included in amounts of 1.6 wt% and_9.8 wt%, respectively, based on the total weight of the negative active material layer and a coating layer including the inorganic layer and the organic layer.

### (Manufacture of Positive Electrode)

Slurry was prepared by adding 94 wt% of a mixture including 90 wt% of LiNi_{0.33}Co_{0.33}Mn_{0.33}O₂ and 10 wt% of LiNi_{0.8}Co_{0.15}Al_{0.05}O₂, 3 wt% of carbon black, and 3 wt% of polyvinylidene fluoride in an N-methylpyrrolidone (NMP) solvent. The slurry was coated on an aluminum (Al) thin film and dried and then, pressed with a roll presser, manufacturing a positive electrode.

### (Preparation of Electrolyte Solution)

An electrolyte solution was prepared by mixing ethylene carbonate, ethylmethyl carbonate, and dimethyl carbonate in a volume ratio of 2:4:4 and adding 1.15 M LiPF₆ to the mixed solvent.

### (Manufacture of Rechargeable Lithium Battery Cell)

A rechargeable lithium battery cell was manufactured by using the positive electrode, the negative electrode, the electrolyte solution, and a polyethylene separator.

### Example 2

A rechargeable lithium battery cell was manufactured according to the same method as Example 1 except for forming the organic layer to be 4 µm thick.

### Example 3

A rechargeable lithium battery cell was manufactured according to the same method as Example 1 except for manufacturing the negative electrode in Example as follows.

The organic layer composition was coated on the negative active material layer to form an organic layer, and the inorganic layer composition was coated on the organic layer to form an inorganic layer, manufacturing a negative electrode. Herein, the organic layer was 4 µm thick, and the inorganic layer was 6 µm thick.

### Example 4

A rechargeable lithium battery cell was manufactured according to the same method as Example 1, except for manufacturing the negative electrode in Example 1 as follows.

A composite layer composition was prepared by mixing 47.5 wt% of a polyethylene particle (using after vaccum drying a product (Mitsui Chemicals, Inc, Chemipearl W401) dispersed in a water) having a melting point of 110° C, an average particle size of 1 µm, and a weight average molecular weight of 5,000, 47.5 wt% of Al₂O₃ (Sumitomo Chemical Co., Ltd., AES-12) having a size of 0.451 µm, and 5 wt% of an acryl-based rubber (ZEON Corporation, BM-520B) in an N-methylpyrrolidone solvent. The composite layer composition was coated on the negative active material layer to form a composite layer, manufacturing a negative electrode. Herein, the composite layer was 8 µm thick. Herein, the polyethylene particle and the Al₂O₃ were included in amounts of 4.9 wt% and_4.9 wt%, respectively, based on the total weight of the negative active material layer and a coating layer including the inorganic layer and the organic layer.

### Comparative Example 1

A rechargeable lithium battery was manufactured according to the same method as Example 1 except for coating the slurry on a copper foil and drying it and then, pressing it with a roll presser to manufacture a negative electrode in Example 1.

### Comparative Example 2

A rechargeable lithium battery cell was manufactured according to the same method as Example 1 except for manufacturing the negative electrode in Example 1 as follows.

The inorganic layer composition was coated on the negative active material layer to form an inorganic layer, manufacturing a negative electrode. Herein, the inorganic layer was 6 µm thick.

### Evaluation 1: Thermal Resistance Evaluation of Rechargeable Lithium Battery Cell

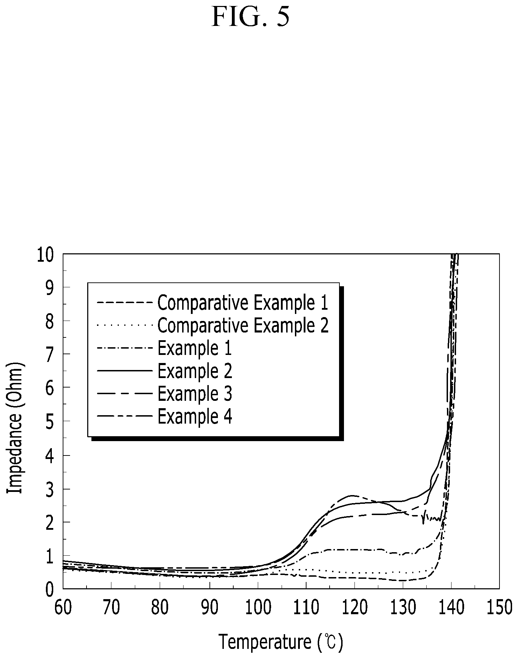

Resistance changes depending on a temperature of the rechargeable lithium battery cells according to Examples 1 to 4 and Comparative Examples 1 and 2 were evaluated, and the results are provided in FIG. 5.

FIG. 5 is a graph showing a relationship between temperature and resistance of the rechargeable lithium battery cells according to Examples 1 to 4 and Comparative Examples 1 and 2.

Referring to FIG. 5, the rechargeable lithium battery cells using a negative electrode having a coating layer including a particulate organic material and an inorganic material on a negative active material layer according to Examples 1 to 4 showed a lower temperature at which resistance starts to increase compared with the rechargeable lithium battery cell using a negative electrode having no coating layer according to Comparative Example 1 and the rechargeable lithium battery cell using a negative electrode coated by only an inorganic material according to Comparative Example 2. Accordingly, the particulate organic material suppressed exothermicity of the battery due to a shut-down function.

### Evaluation 2: Penetration Safety of Rechargeable Lithium Battery Cell

Penetration safety of the rechargeable lithium battery cells according to Examples 1 to 4 and Comparative Examples 1 and 2 were evaluated, and the results were provided in the following Table 1.

The rechargeable lithium battery cells were charged at a charge current of 0.5C up to 4.20V and cut off at 0.05C and penetration evaluation was performed by using a penetration pin having a diameter of 2.5 mm at a speed of 80 mm/sec.

**[Table 1]**

| | Examples | | | | Comparative Examples | |
|---|---|---|---|---|---|---|
| | 1 | 2 | 3 | 4 | 1 | 2 |
| Evaluation result of penetration safety | Non-ignition (maximum temperature 125° C) | Non-ignition (maximum temperature 79° C) | Non-ignition (maximum temperature 81° C) | Non-ignition (maximum temperature 78° C) | Explosion | Ignition |

Referring to Table 1, the rechargeable lithium battery cells using a negative electrode having a coating layer including a particulate organic material and an inorganic material on a negative active material layer according to Examples 1 to 4 showed excellent penetration safety compared with the rechargeable lithium battery cell using a negative electrode having no coating layer according to Comparative Example 1 and the rechargeable lithium battery cell using a negative electrode coated by only an inorganic material according to Comparative Example 2. In addition, the rechargeable lithium battery cell using a negative electrode including more particulate organic material of Examples 1 and 2, that is, a thicker organic layer according to Example 2 showed better penetration safety. Accordingly, the negative electrode coated with a particulate organic material and an inorganic material on the surface showed excellent penetration safety due to a shut-down function.

While this disclosure has been described in connection with what is presently considered to be practical exemplary embodiments, it is to be understood that the invention is not limited to the disclosed embodiments, but, on the contrary, is intended to cover various modifications and equivalent arrangements included within the scope of the appended claims.

## Claims

1. A negative electrode for a rechargeable lithium battery comprising:
a current collector;
a negative active material layer disposed on the current collector; and
a coating layer disposed on the negative active material layer;
wherein the coating layer comprises a particulate organic material and an inorganic material, and wherein the coating layer has a single-layered or multi-layered structure **characterised in that**:
the particulate organic material is present in an amount of from 0.5 to 10% by weight based on the total weight of the negative active material layer and the coating layer;
the inorganic material is present in an amount of from 1 to 20% by weight based on the total weight of the negative active material layer and the coating layer;
the inorganic material is one or more selected from the group consisting of SiO₂, Al₂O₃, Al(OH)₃, AlO(OH), TiO₂, BaTiO₂, ZnO₂, Mg(OH)₂, MgO, Ti(OH)₄, aluminium nitride, silicon carbide and boron nitride; and
the particulate organic material is a polymer, wherein the polymer is one or more selected from the group consisting of a polyolefin, a polyolefin derivative, a polyolefin wax and an acryl-based compound.

2. A negative electrode according to Claim 1, wherein the coating layer has a single-layered structure and is a composite layer comprising the particulate organic material and the organic material.

3. A negative electrode according to Claim 1, wherein the coating layer has a multi-layered structure comprising:
an inorganic layer comprising the inorganic material disposed on the negative active material layer; and
an organic layer comprising the particulate organic material disposed on the inorganic layer.

4. A negative electrode according to Claim 1, wherein the weight average molecular weight of the polymer is from 300 to 10,000.

5. A negative electrode according to any preceding claim, wherein the melting point of the particulate organic material is from 85°C to 130°C.

6. A negative electrode according to any preceding claim, wherein the particle size of the particulate organic material is from 0.1 to 5 µm.

7. A negative electrode according to any preceding claim, wherein the inorganic material is particulate and preferably has a particle size of from 0.1 to 5 µm.

8. A negative electrode according to any preceding claim, wherein the thickness of the coating layer is from 1 to 20 µm.

9. A rechargeable lithium battery comprising a positive electrode, a separator, and a negative electrode according to any preceding claim.

10. A rechargeable lithium battery according to Claim 9, wherein the separator comprises an organic material and wherein the melting point of the organic material of the separator is higher than the melting point of the particulate organic material of the coating layer.

## Patentansprüche

1. Negativelektrode für eine wiederaufladbare Lithiumbatterie, umfassend: einen Stromabnehmer;
eine auf dem Stromabnehmer angeordnete negative Aktivmaterialschicht; und eine auf der negativen Aktivmaterialschicht angeordnete Deckschicht;
wobei die Deckschicht ein partikuläres organisches Material und ein anorganisches Material umfasst, und wobei die Deckschicht eine einzeln geschichtete oder mehrfach geschichtete Struktur aufweist, **dadurch gekennzeichnet, dass**:
das partikuläre organische Material in einer Menge von 0,5 bis 10 Gew.-%, basierend auf dem Gesamtgewicht der negativen Aktivmaterialschicht und der Deckschicht, vorliegt;
das anorganische Material in einer Menge von 1 bis 20 Gew.-% basierend auf dem Gesamtgewicht der negativen Aktivmaterialschicht und der Deckschicht vorliegt;
das anorganische Material eines oder mehrere ausgewählt aus der Gruppe bestehend aus SiO₂, Al₂O₃, Al(OH)₃, AIO(OH), TiO₂, BaTiO₂, ZnO₂, Mg(OH)₂, MgO, Ti(OH)₄, Aluminiumnitrid, Siliziumkarbid und Bornitrid ist; und das partikuläre organische Material ein Polymer ist, wobei das Polymer eines oder mehrere ausgewählt aus der Gruppe bestehend aus einem Polyolefin, einem Polyolefin-Derivat, einem Polyolefin-Wachs und einer Verbindung auf Acrylbasis ist.

2. Negative Elektrode nach Anspruch 1, wobei die Deckschicht eine einzeln geschichtete Struktur aufweist und eine Verbundschicht ist, die das partikuläre organische Material und das anorganische Material umfasst.

3. Negative Elektrode nach Anspruch 1, wobei die Deckschicht eine mehrfach geschichtete Struktur aufweist, die Folgendes umfasst:
eine anorganische Schicht, die das auf der negativen Aktivmaterialschicht angeordnete anorganische Material umfasst; und
eine organische Schicht, die das auf der anorganischen Schicht angeordnete partikuläre organische Material umfasst.

4. Negative Elektrode nach Anspruch 1, wobei das Gewichtsmittel des Molekulargewichts des Polymers 300 bis 10.000 beträgt.

5. Negative Elektrode nach einem der vorangehenden Ansprüche, wobei der Schmelzpunkt des partikulären organischen Materials 85 °C bis 130 °C beträgt.

6. Negative Elektrode nach einem der vorangehenden Ansprüche, wobei die Partikelgröße des partikulären organischen Materials 0,1 bis 5 µm beträgt.

7. Negative Elektrode nach einem der vorangehenden Ansprüche, wobei das anorganische Material partikulär ist und eine Partikelgröße von 0,1 bis 5 µm aufweist.

8. Negative Elektrode nach einem der vorangehenden Ansprüche, wobei die Dicke der Deckschicht 1 bis 20 µm beträgt.

9. Wiederaufladbare Lithiumbatterie umfassend eine positive Elektrode, einen Separator und eine negative Elektrode nach einem der vorangehenden Ansprüche.

10. Wiederaufladbare Lithiumbatterie nach Anspruch 9, wobei der Separator ein organisches Material umfasst und wobei der Schmelzpunkt des organischen Materials des Separators höher ist als der Schmelzpunkt des partikulären organischen Materials der Deckschicht.

## Revendications

1. Électrode négative pour une batterie au lithium rechargeable comprenant :
un collecteur de courant ;
une couche de matériau actif négatif disposée sur le collecteur de courant ; et
une couche de revêtement disposée sur la couche de matériau actif négatif ;
dans laquelle la couche de revêtement comprend un matériau organique particulaire et un matériau inorganigue, et dans laquelle la couche de revêtement a une structure monocouche ou multicouche **caractérisée en ce que** :
le matériau organique particulaire est présent en une quantité de 0,5 à 10 % en poids par rapport au poids total de la couche de matériau actif négatif et de la couche de revêtement ;
le matériau inorganique est présent en une quantité de 1 à 20 % en poids par rapport au poids total de la couche de matériau actif négatif et de la couche de revêtement ;
le matériau inorganique est un ou plusieurs choisis dans le groupe consistant en SiO₂, Al₂O₃, Al(OH)₃, AlO(OH), TiO₂, BaTiO₂, ZnO₂, Mg(OH)₂, MgO, Ti(OH)₄, le nitrure d'aluminium, le carbure de silicium et le nitrure de bore ; et
le matériau organique particulaire est un polymère, où le polymère est un ou plusieurs choisis dans le groupe consistant en une polyoléfine, un dérivé de polyoléfine, une cire de polyoléfine et un composé à base d'acryle.

2. Électrode négative selon la revendication 1, dans laquelle la couche de revêtement a une structure monocouche et est une couche composite comprenant le matériau organique particulaire et le matériau organigue.

3. Électrode négative selon la revendication 1, dans laquelle la couche de revêtement a une structure multicouche comprenant :
une couche inorganique comprenant le matériau inorganique disposée sur la couche de matériau actif négatif ; et
une couche organique comprenant le matériau organique particulaire disposée sur la couche inorganique.

4. Électrode négative selon la revendication 1, dans laquelle le poids moléculaire moyen en poids du polymère est compris entre 300 et 10000.

5. Électrode négative selon l'une des revendications précédentes, dans laquelle le point de fusion du matériau organique particulaire est de 85°C à 130°C.

6. Électrode négative selon l'une des revendications précédentes, dans laquelle la taille de particule du matériau organique particulaire est de 0,1 à 5 µm.

7. Électrode négative selon l'une des revendications précédentes, dans laquelle le matériau inorganique est particulaire et a de préférence une taille de particule de 0,1 à 5 µm.

8. Électrode négative selon l'une des revendications précédentes, dans laquelle l'épaisseur de la couche de revêtement est comprise entre 1 et 20 µm.

9. Batterie au lithium rechargeable comprenant une électrode positive, un séparateur et une électrode négative selon l'une des revendications précédentes.

10. Batterie au lithium rechargeable selon la revendication 9, dans laquelle le séparateur comprend un matériau organique et dans laquelle le point de fusion du matériau organique du séparateur est supérieur au point de fusion du matériau organique particulaire de la couche de revêtement.
